# EUROPÄISCHE PATENTSCHRIFT

(11) **EP 1 927 147 B1**
(45) Veröffentlichungstag und Bekanntmachung des Hinweises auf die Patenterteilung: **14.12.2016**
(21) Anmeldenummer: 05793680.9
(22) Anmeldetag: 20.09.2005
(51) Int. Cl.: H01M 2/10

(54) **AKKUPACK SOWIE ELEKTROHANDWERKZEUGGERÄT**
RECHARGEABLE BATTERY PACK AND ELECTRICAL HAND TOOL DEVICE
BLOC D'ACCUMULATEURS ET OUTIL ELECTRIQUE A MAIN

(43) Veröffentlichungstag der Anmeldung: 04.06.2008
(60) Teilanmeldung: 16195951.5
(73) Patentinhaber: Metabowerke GmbH, 72622 Nürtingen (DE)
(72) Erfinder: LIERSCH, Ralph, 72555 Metzingen (DE); STICKEL, Wolfgang, 72660 Beuren (DE); GRÄBER, Jochen, 73266 Bissingen (DE)
(74) Vertreter: Raunecker, Klaus Peter
(86) Internationale Anmeldenummer: PCT/EP2005/010108
(87) Internationale Veröffentlichungsnummer: WO 2007/033689

(56) Entgegenhaltungen:
- EP-A- 1 109 237
- DE-A1- 3 246 968
- JP-A- 2004 031 284

## Beschreibung

Die Erfindung betrifft einen Akkupack, insbesondere für ein Elektrohandwerkzeuggerät, umfassend mindestens zwei in Reihe geschaltete Akkuzellen oder Akkuzellenblöcke und eine Elektronikeinheit mit einer Leiterplatte, wobei Leiterbleche zur elektrischen Verbindung der in Reihe geschalteten Akkuzellen oder Akkuzellenblöcke vorgesehen sind, welche unmittelbar mit der Leiterplatte verbunden sind.

So ist es zum Betrieb von Elektrohandwerkzeugen vielfach vorgesehen, Akkupacks einzusetzen, da Akkugeräte eine höhere Flexibilität beim Arbeiten und insbesondere eine Unabhängigkeit von einer vorhandenen Stromquelle ermöglichten und somit auch Außenarbeiten unbeschränkt von der Frage einer Stromquelle durchgeführt werden können. Dabei weisen Akkugeräte einen wiederaufladbaren Akkumulator in einem Akkugehäuse auf, das mit dem Gerätegehäuse eines Elektrohandwerkzeuggeräts koppelbar ist, wobei beim Koppeln der beiden Gehäuse der Motor elektrisch an den Akkupack angekoppelt und darüber mit Strom versorgt wird. Zum Koppeln der beiden Gehäuse ist gewöhnlich das Akkugehäuse mit einer überstehenden Verrastvorrichtung versehen, die in eine komplementäre Einsteckbuchse des Gerätegehäuses eingeschoben und in dieser verrastet wird. Die elektrische Kontaktierung erfolgt zumeist im Bereich der Verrastungsvorrichtung.

In aller Regel ist es vorgesehen, die Akkuzellen untereinander bzw. Akkuzellenblöcke untereinander in Reihe zu schalten. Für die Reihenschaltung werden zum Teil sogenannte Leiterbleche verwendet, die die jeweiligen komplementären Pole einer Akkuzelle miteinander verbinden.

Eine analoge Ausgestaltung für eine Batterie ist beispielsweise aus der DE 94 04 070.2 bekannt, die einen Batteriesatz beschreibt, bei dem einzelne Batterien in batterieaufnehmenden Zellen angeordnet sind, wobei Leiterbleche verwendet werden, die zur Verbindung und Reihenschaltung der einzelnen Batterien miteinander dienen. Die Leiterbleche sind hierbei gemäß der Beschreibung bogenförmig angeordnet.

Darüber hinaus ist es bekannt, bei Lithiumionenakkus, bei denen der Ladezustand und der Aufladevorgang über die Elektronik des Akkupacks überwacht werden, vorzusehen, dass die einzelnen Akkuzellen zur Überwachung ihrer Zellen mit der Elektronik verbunden sind. Hierzu werden im Stand der Technik Litzen vorgesehen, die die Akkuzellen mit der Elektronikeinheit und hier insbesondere der Leiterplatte verbinden. Nachteilig ist dabei der verhältnismäßig hohe Montageaufwand.

Daneben ist aus den Dokumenten DE 32 46 968 A1 und EP 1 109 237 A eine Akkupackanordnung bekannt, bei der in Schichten angeordnete Zellen, die auf beiden Seiten durch elektrische Kontaktanordnungen oder Anschlussteile miteinander verbunden sind. Die Anordnung mehrerer Anschlussteile bzw. Kontaktteile ist jedoch in der Praxis aufwändig bei der Herstellung der Akkupackanordnungen.

Schließlich offenbart die JP 2004/0321284 eine Akkupackanordnung, bei der in Schichten angeordnete Zellen in einem Gehäuse aufgenommen sind. Auch diese Anordnung erfordert eine genaue Herstellung und Montage.

Es ist daher Aufgabe der Erfindung, einen Akkupack bereitzustellen, bei dem eine Reihenschaltung der Akkuzellen untereinander sowie die Anbindung an die Leiterplatten vereinfacht ist.

Dies erfolgt erfindungsgemäß dadurch, dass ein Akkupack mit den Merkmalen des Anspruchs 1 solche Leiterbleche vorsieht, die unmittelbar mit der Leiterplatte verbunden sind. Auf diese Weise kann auf eine zusätzliche Kontaktierung über Litzen der einzelnen Akkuzellen mit der Elektronik verzichtet werden. Weiterhin ist erfindungsgemäß vorgesehen, dass die Akkuzellen mittels eines Zellenträgers gelagert und durch diesen voneinander derart getrennt sind, dass keine Berührung der Akkuzellen untereinander erfolgt. Auf diese Weise wird verhindert, dass Kurzschlüsse über die Berührung der einzelnen Akkuzellen miteinander entstehen. Der Zellenträger kann dabei insbesondere aus einem Spritzgussteil bestehen, das entsprechende Aufnahmen für die Akkuzellen aufweist.

Dabei ist es besonders vorteilhaft, wenn gleichzeitig über die Leiterbleche eine elektrische als auch mechanische Verbindung zwischen den einzelnen Akkuzellen und der Leiterplatte erfolgt. Auf diese Weise kann gleichzeitig eine Halterung der Leiterplatte durch die Leiterbleche gegenüber einer Akkuzelle oder einem Akkuzellenblock erreicht werden. Unter Akkuzellenblöcke sind hierbei zwei oder mehr Akkuzellen zu verstehen, die parallel geschaltet sind und mit weiteren Akkuzellen oder Akkuzellenblöcken seriell gekoppelt sind.

Dabei kann vorgesehen sein, dass die Leiterbleche geometrisch so gestaltet sind, dass sie in Form von seitlichen Anschlussfahnen von der Leiterplatte abstehen. Sie können dann so abgewinkelt werden, dass sie von der Leiterplatte in Richtung der Akkuzellen weisen.

Dabei ist es besonders vorteilhaft, wenn die Leiterbleche mit der Leiterplatte über Nietverbindungen festgelegt sind. Zum einen wird eine besonders einfache mechanische und auch elektrische Kontaktierung über Nietverbindungen erreicht, zum anderen bietet eine Nietverbindung auch eine große Sicherheit. Schließlich kann durch eine entsprechende Nietverbindung auch ein Toleranzausgleich sowie ein Wärmedehnungsausgleich erzielt werden.

Generell besitzt die mechanisch wie auch die elektrische Kopplung über Leiterbleche an die Leiterplatte den Vorteil, dass die Leiterplatte gegenüber den Akkuzellen bzw. Akkuzellenblöcken federnd gelagert ist, da die Leiterbleche zugleich als Federelemente wirken. Auf diese Weise kann eine zusätzliche Vibrationsfestigkeit erreicht werden, da insbesondere Vibrationen, wie sie bei Elektrohandwerkzeugen, insbesondere bei Schlagbohreinrichtungen oder Bohrhämmern im Betrieb entstehen, ausgeglichen werden können.

Die Kombination dieser verschiedenen Gesichtspunkte in einem Bauteil stellt dabei den besonderen Vorteil der Erfindung dar.

Die Akkuzellen können dabei insbesondere Lithiumionenzellen sein. Insbesondere bei Lithiumzellen ist es möglich, mehrere Akkuzellen zu sogenannten Akkuzellenblöcken zusammenzufassen, in denen mehrere Akkuzellen parallel geschaltet sind. Hierbei wird jeweils ein Akkuzellenblock mit der Elektronik verbunden. Mittels der Elektronik kann u. a. der Ladezustand über die Spannung der einzelnen Zellen überwacht werden. Des Weiteren kann so eine Laderegelung erfolgen. Dabei liegt hinter parallel geschalteten Zellen stets die gleiche Spannung an, so dass die Spannung bei Akkuzellenblöcken je Block bestimmt werden muss.

Durch die Kopplung der Akkuzellen bzw. Akkuzellenblöcke an die Leiterplatte kann festgestellt werden, ob alle Akkuzellen vorschriftsmäßig geladen werden bzw. ob gegebenenfalls ein Ladestrom erreicht wird, den die Akkuzellen nicht zu verkraften vermögen. Darüber hinaus kann eine Regelung vorgesehen sein, mittels derer der Ladestrom so geregelt wird, dass eine Überlastung einzelner Akkuzellen verhindert wird und auf der anderen Seite sämtliche Akkuzellen vollständig aufgeladen werden können. Auf diese Weise wird über lange Zeit eine gute Gebrauchsfähigkeit des entsprechenden Akkupacks und damit des mit diesem verwendeten Elektrohandwerkzeuggeräts erreicht.

Die Pole der einzelnen Akkuzellen können dabei materialschlüssig, insbesondere über Schweiß- oder Lötverbindungen, mit den Leiterblechen verbunden sein. Darüber hinaus kann auch vorgesehen sein, dass am Zellenträger Befestigungselemente vorgesehen sind, mit denen der Zellenträger mit den darin aufgenommenen Akkuzellen, die gemeinsam als Corepack bezeichnet werden, mit der Elektronikeinheit verbunden wird. Eine entsprechende Verbindung kann beispielsweise über eine Rastverbindung erfolgen, indem entsprechende Rasteinrichtungen am Corepack vorgesehen sind, die Rastvorsprünge unter mechanischer Verformung an der Elektronikeinheit hintergreifen und so für eine formschlüssige Verbindung sorgen.

Die Elektronikeinheit kann über die Leiterplatte hinaus noch ein Elektronikgehäuse umfassen, in das die Leiterplatte mit den hieran montierten Leiterblechen aufgenommen wird. Die Leiterplatte trägt schließlich eine Reihe weiterer Elektronikelemente und es kann eine Software zur Steuerung, Regelung oder auch zur Erkennung des Akkupacks auf die Leiterplatte aufgespielt werden. Darüber hinaus können weitere Bauteile, wie insbesondere Schalter, aber auch Ladezustandsanzeigen, mit der Leiterplatte verbunden sein. Die Leiterplatte wird dann insbesondere in das Elektronikgehäuse eingefügt, und das Elektronikgehäuse wird dann mittels eines Harzes ausgegossen, so dass die Leiterplatte mit dem Elektronikgehäuse fest verbunden ist.

Schließlich umfasst die Erfindung ein Elektrohandwerkzeuggerät, mit einem Elektromotor sowie einem lösbar hiermit verrastbaren Akkupack der vorstehend beschriebenen Art zum Antrieb des Elektromotors, wobei eine Einrichtung zum mechanischen und elektrischen Kontaktieren des Akkupacks mit einem Gehäuse des Elektrohandwerkzeuggeräts vorgesehen ist.

Die Erfindung soll im Folgenden anhand einer Zeichnung näher erläutert werden. Dabei zeigen:
- Figur 1: eine Explosionsdarstellung der Elektronikeinheit sowie eines Corepacks eines Akkupacks;
- Figur 2: einen Akkupack ohne Akkugehäuse und
- Figur 3: einen Ausschnitt aus Figur 2 hinsichtlich der Verrastung.

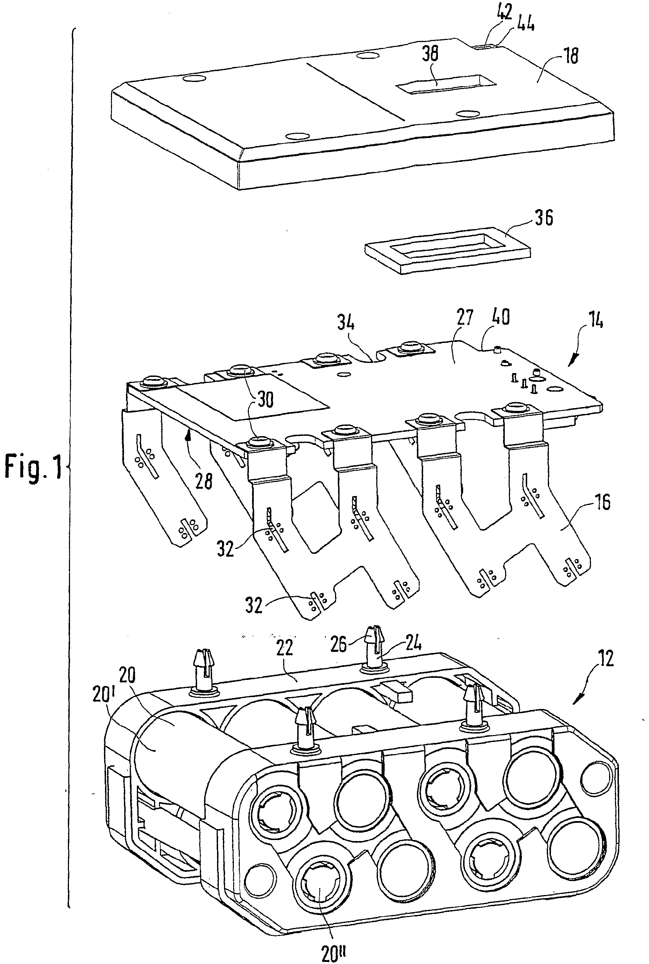

Figur 1 zeigt eine Explosionsdarstellung eines Corepacks (untere Darstellung), der in seiner Gesamtheit mit 12 bezeichnet ist, sowie einer Leiterplatte 14 mit Leiterblechen 16 (mittlere Darstellung) sowie eines Elektronikgehäuses 18 (obere Darstellung).

Das Corepack 12 umfasst hierbei acht Akkuzellen 20, wobei jeweils zwei Zellen 20' und 20'' zu einem Akkuzellenblock parallel geschaltet sind. Bei den Akkuzellen 20 handelt es sich um Lithiumionenzellen, die, anders als Nickel-Cadmium-Zellen, eine Parallelschaltung ermöglichen. Die Akkuzellenblöcke bestehen aus den Akkuzellen 20' und 20'' und sind jeweils in Reihe hintereinander geschaltet. Die Akkuzellen 20 sind in einen Zellenträger 22 aufgenommen und durch diesen voneinander derart getrennt, dass keine Berührung der Akkuzellen 20 untereinander erfolgt, da dies zu Kurzschlüssen führen könnte. Die Pole der einzelnen Akkuzellen 20 sind hierbei durch den Zellenträger 22 ausgespart, so dass eine elektrische Kontaktierung vorgenommen werden kann.

Darüber hinaus ist am Zellenträger 22 eine Verrastvorrichtung 24 vorgesehen, die aus vier Pinnen besteht, die mit Rastnasen 26 versehen. Die Rastnasen 26 sind so geschlitzt, dass ein Federn der Rastnasenhälften aufeinanderzu so erfolgt, dass die Pinnen 24 einschließlich der Rastnasen 26 durch eine Öffnungen geführt werden können und dann nach Ausfedern eine Verrastung hinter einem Vorsprung erfolgt.

Auf den Corepack 12 wird später bei der Montage die Elektronikeinheit aufgesetzt, die in der mittleren Darstellung gezeigt ist. Diese beinhaltet eine Leiterplatte 14, auf deren Oberseite 27 verschiedene Lötstellen vorgesehen sind und die darüber hinaus auch eine Schaltung trägt, die es ermöglicht, eine Software aufzuspielen. Weitere Baugruppen der Elektronik sind auf der Unterseite 28 der Leiterplatte 14 angeordnet, wie beispielsweise Lichtquellen für eine Ladezustandsanzeige sowie Schalter etc.

Über Nieten 30 mit der Leiterplatte 14 verbunden sind die Leiterbleche 16, die über Kontaktbereiche 32 mit den Polen der Akkuzellen 20 über eine materialschlüssige Verbindung verbunden werden. Dabei erfolgt über die Leiterbleche 16 sowohl die Parallel- als auch die Reihenschaltung der einzelnen Akkuzellen untereinander. Darüber hinaus sorgen die Leiterbleche 16 für eine Verbindung mit der Elektronik über die Nieten 30, mittels derer die Leiterbleche 16 an der Leiterplatte 14 befestigt sind.

Eine Verbindung der Zellen 20 mit der Elektronik über Leiterbleche besitzt dabei den Vorteil, dass Schwingungen ausgeglichen werden können, da die Leiterbleche 16 als Federelemente wirken und auch eine mechanische Verbindung zwischen Leiterplatte und Akkuzellen neben der elektrischen erfolgt, die die Leiterplatte nach einer Verschweißung mit den Akkuzellen 20 an diesen festlegt.

Darüber hinaus weist die Leiterplatte 14 Ausnehmungen 34 auf, die im Bereich der Pinne 24 zu liegen kommen und diese umschließen.

Die Leiterplatte 14 wird nun vor Montage mit dem Corepack mit einem Elektronikgehäuse 18 verbunden, das in der oberen Darstellung gezeigt ist. Hierzu wird auf die Leiterplatte 14 ein Moosgummielement 36 aufgelegt, und Leiterplatte und Moosgummielement 36 werden dann in das Elektronikgehäuse 18 eingefügt. Das Elektronikgehäuse 18 wird anschließend mit einem Harz ausgegossen, so dass eine feste Verbindung zwischen der Leiterplatte 14 und dem Elektronikgehäuse 18 gegeben ist.

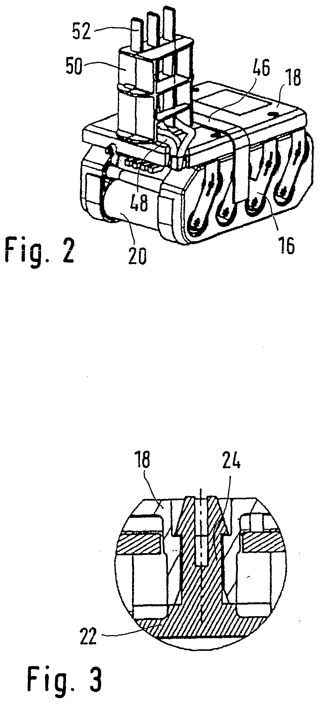

Eine entsprechende Verbindung ist dann in Figur 2 zu erkennen, bei der bereits ein Vergießen von Elektronikkomponenten, wie beispielsweise der Leiterplatte 14 etc., mit dem Elektronikgehäuse 18 erfolgt ist. Über das Moosgummielement 36 wird verhindert, dass in den Bereich der Durchführung 38 Gießharzmasse gelangt. Über die Durchführung 36 wird später ein Aufspielen der Software auf die Leiterplatte vorgenommen.

Darüber hinaus weisen sowohl Leiterplatte 14 als auch das Elektronikgehäuse 18 eine Ausnehmung 40 bzw. 42 in einem Eckbereich auf, über den Kabel 48 (s. Figur 2) von der Leiterplattenunterseite 14 an die Oberseite des Elektronikgehäuses 18 geführt werden können. Die Ausnehmung 42 des Elektronikgehäuses 18 weist hierzu eine Klammer 44 auf, die für eine Führung der Kabel 48 verantwortlich ist. Die Kabel 48 werden dann im Bereich der Durchführung 38 mit einem Verbindungsdom 50 verbunden und zu Kontakten 52 geführt, die später zu einer elektrischen Kontaktierung mit einem Elektrohandwerkzeuggerät dienen (Figur 2).

Figur 2 zeigt weiterhin einen bereits montierten Akkupack, jedoch ohne Akkugehäuse. Hierbei wurde die Elektronikeinheit umfassend das Elektronikgehäuse 18 sowie die nicht mehr zu erkennende Leiterplatte 14 bereits über Schweißverbindungen mit den Akkuzellen 20 verbunden. Zur weiteren Dämpfung wird nun noch vor Montage des Akkugehäuses ein weiteres Dämpfungselement 46 in Form eines Schaumstoffstreifens zwischen Gehäuse und Elektronikgehäuse angeordnet.

Mit dem Gehäuse wird schließlich noch eine mechanische Verrasteinrichtung für den Akkupack mit einem Elektrohandwerkzeuggerät bereitgestellt.

Figur 3 zeigt ein Detail, wobei hier die Verrastung des Corepacks 12 über den Zellenträger 22 und den geschlitzten Pin 24 mit dem Elektronikgehäuse 18 zu sehen ist. Die Pinne 24 sind dabei hinsichtlich ihrer Länge so ausgebildet, dass sie nach Verrastung nicht oder nur unwesentlich über die Oberfläche des Elektronikgehäuses 18 hinausragen.

Auf die vorstehend beschriebene Weise kann besonders einfach eine elektrische und eine mechanische Kopplung von Akkuzellen 20 mit einer Leiterplatte realisiert werden. Über die elektrische Kopplung ist es möglich, den Ladezustand über die Spannung der einzelnen Akkuzellen 20 bzw. Akkuzellenblöcke zu ermitteln, um hierüber den Ladevorgang zu steuern. Darüber hinaus bietet eine entsprechende Anordnung den Vorteil einer sicheren elektrischen Verbindung der Akkuzellen 20 untereinander und zur Elektronik sowie einer Vibrationsfestigkeit.

## Patentansprüche

1. Akkupack, insbesondere für ein Elektrohandwerkzeuggerät umfassen mindestens zwei in Reihe geschaltete Akkuzellen (20) und/oder Akkuzellenblöcke und eine Elektronikeinheit mit einer Leiterplatte (14), wobei Leiterbleche (16) zur elektrischen Verbindung der in Reihe geschalteten Akkuzellen (20) und/oder Akkuzellenblöcke vorgesehen sind, welche unmittelbar mit der Leiterplatte (14) verbunden sind, wobei die Leiterbleche (16) in Form von seitlichen Anschlussfahnen von der Leiterplatte (14) abstehen,
**dadurch gekennzeichnet, dass** die Akkuzellen (20) mittels eines Zellenträgers (22) gelagert und derart durch diesen voneinander getrennt sind, dass keine Berührung der Akkuzellen (20) untereinander erfolgt.

2. Akkupack nach Anspruch 1,
**dadurch gekennzeichnet, dass** die Leiterbleche (16) über ein Verbindungselement zugleich elektrisch und mechanisch mit der Leiterplatte (14) verbunden sind.

3. Akkupack nach Anspruch 1 oder 2,
**dadurch gekennzeichnet, dass** die Leiterbleche (16) über Nietverbindungen (30) an der Leiterplatte (14) festgelegt sind.

4. Akkupack nach einem der vorangehenden Ansprüche, **dadurch gekennzeichnet, dass** die Akkuzellen (20) Lithiumionenzellen sind.

5. Akkupack nach einem der vorangehenden Ansprüche, **dadurch gekennzeichnet, dass** zwei oder mehr Akkuzellen (20) zu Akkuzellenblöcken parallel geschaltet sind.

6. Akkupack nach einem der vorangehenden Ansprüche, **dadurch gekennzeichnet, dass** die Leiterbleche (16) mit Polen der Akkuzellen (20) über eine Schweiß- oder Lötverbindung verbunden sind.

7. Akkupack nach einem der vorangehenden Ansprüche, **dadurch gekennzeichnet, dass** die Leiterplatte (14) mit den montierten Leiterblechen (16) in ein Elektronikgehäuse (18) aufgenommen und insbesondere hierin eingegossen ist.

8. Akkupack nach einem der vorangehenden Ansprüche, **dadurch gekennzeichnet, dass** das Elektronikgehäuse (18) mittels einer Rastverbindung auf dem Zellenträger (22) festlegbar ist.

9. Elektrohandwerkzeuggerät mit einem Elektromotor sowie einem lösbar hiermit verrastbaren Akkupack nach einem der vorangehenden Ansprüche zum Antrieb des Elektromotors, wobei eine Einrichtung zum mechanischen und elektrischen Kontaktieren des Akkupacks mit einem Gehäuse des Elektrohandwerkzeuggerätes vorgesehen ist.

## Claims

1. A battery pack especially for a hand-held power tool, comprising at least two battery cells (20) connected in series, and/or battery cell blocks and an electronic unit with a printed circuit board (14), wherein sheet metal conductors (16) are provided for electrically connecting the battery cells (20) and/or battery cell blocks connected in series which are directly connected to the printed circuit board (14), wherein the sheet metal conductors (16) are formed as terminal lugs that extend laterally from the printed circuit board (14),
**characterized in that** the cells are supported by a cell carrier (22) and separated from one another by the latter such that the cells do not contact each other.

2. A battery pack as set forth in claim 1,
**characterized in that** the sheet metal conductors (16) are at the same time electrically and mechanically connected with the printed circuit board (14) by a connecting element.

3. A battery pack as set forth in claim 1 or 2,
**characterized in that** the sheet metal conductors (16) are fastened to the printed circuit board-(14) using rivet joints (30).

4. A battery pack as set forth in any of the foregoing claims, **characterized in that** the battery cells (20) are lithium ion cells.

5. A battery pack as set forth in any of the foregoing claims, **characterized in that** two or more battery cells (20) are parallel connected into battery cell blocks.

6. A battery pack as set forth in any of the foregoing claims, **characterized in that** the sheet metal conductors (16) are connected to the poles of the battery cells (20) by welding or soldering.

7. A battery pack as set forth in any of the foregoing claims, **characterized in that** the printed circuit board (14) together with the assembled sheet metal conductors (16) are housed in an electronics housing (18), and especially are cast in the electronics housing (18).

8. A battery pack as set forth in any of the foregoing claims, **characterized in that** the electronics housing (18) is joined to the cell carrier (22) using a latch connection.

9. Hand-held power tool with an electric motor and a battery pack with the features of any of the foregoing claims that can be detachably latched to the power tool in order to drive the electric motor, comprising a device for establishing the mechanical and electrical contact of the battery pack with a housing of the hand-held power tool.

## Revendications

1. Groupe d'accumulateurs, en particulier pour un appareil électroportatif, comportant au moins deux rangées de cellules d'accumulateurs couplées (20) et/ou blocs de cellules d'accumulateurs et une unité électronique avec une plaque conductrice (14), dans lequel des tôles conductrices (16) sont prévues pour la connexion électrique des cellules d'accumulateurs (20) montées en série et/ou des blocs de cellules d'accumulateurs, et sont connectées à la plaque conductrice (14), dans lequel les tôles conductrices (16) sont réalisées sous la forme de brides latérales qui se projettent en s'écartant de la plaque conductrice (14),
**caractérisé en ce que**
les cellules d'accumulateurs (20) sont positionnées au moyen d'un support de cellules (22) et séparées ainsi entre elles par ce dernier, pour qu'aucun contact des cellules d'accumulateurs entre elles, ne puisse avoir lieu.

2. Groupe d'accumulateurs selon la revendication 1, **caractérisé en ce que** les tôles conductrices (16) sont à la fois connectées électriquement et mécaniquement au moyen d'un élément de liaison avec la plaque conductrice (14).

3. Groupe d'accumulateurs selon les revendications 1 ou 2, **caractérisé en ce que** les tôles conductrices (16) sont fixées à la plaque conductrice (14) au moyen de liaisons par des rivets (30).

4. Groupe d'accumulateurs selon l'une des revendications précédentes, **caractérisé en ce que** les cellules d'accumulateurs (20) sont des cellules au lithium.

5. Groupe d'accumulateurs selon l'une des revendications précédentes, **caractérisé en ce que** deux ou plusieurs cellules d'accumulateurs (20) sont connectées en parallèle avec des blocs de cellules d'accumulateurs.

6. Groupe d'accumulateurs selon l'une des revendications précédentes, **caractérisé en ce que** les tôles conductrices (16) sont raccordées aux pôles des cellules d'accumulateurs (20) au moyen d'un couplage par soudure ou par brasure.

7. Groupe d'accumulateurs selon l'une des revendications précédentes, **caractérisé en ce que** la plaque conductrice (14) avec les tôles conductrices (16) assemblées, est logée dans un boîtier électronique (18) et notamment encastrée à l'intérieur.

8. Groupe d'accumulateurs selon l'une des revendications précédentes, **caractérisé en ce que** le boitier électronique (18) est monté de façon fixe au moyen d'un couplage par encliquetage.

9. Appareil électroportatif, comportant un moteur électrique ainsi qu'un groupe d'accumulateurs amovible fixé par encliquetage, selon une des revendications précédentes, pour l'entraînement dudit moteur électrique, dans lequel une installation est prévue pour réaliser un contact mécanique et électrique du groupe d'accumulateurs avec un boîtier de l'appareil électroportatif.
